# EUROPEAN PATENT SPECIFICATION

(11) **EP 3 494 074 B1**
(45) Date of publication and mention of the grant of the patent: **30.07.2025**
(21) Application number: 17761143.1
(22) Date of filing: 04.08.2017
(51) Int. Cl.: B65G 13/071, B65G 13/08

(54) **CONVEYOR SECTION**
FÖRDERSTRECKE
SECTION DE CONVOYEUR

(30) Priority: 05.08.2016 US 201662371523 P; 25.10.2016 US 201615333854
(43) Date of publication of application: 12.06.2019
(73) Proprietor: Intelligrated Headquarters, LLC, Mason, OH 45040 (US)
(72) Inventor: MOSER, Michael, E., Hamilton, OH 45011 (US); KLUEBER, Kevin, Lawrence, Morris Plains NJ New Jersey 07950 (US); LIM, Jonathan, Milford, OH 45150 (US)
(74) Representative: Haseltine Lake Kempner LLP
(86) International application number: PCT/US2017/045425
(87) International publication number: WO 2018/027094

(56) References cited:
- EP-A2- 1 161 388
- DE-U1- 20 207 498
- DE-U1- 202004 019 963
- JP-A- 2002 019 933
- US-A- 4 096 942
- US-A- 4 753 339
- US-B1- 6 612 423

## Description

### CLAIM OF PRIORITY UNDER 35 U.S.C. §119

The present Application for patent claims priority to U.S. Provisional Patent Application Serial Number 62/371,523 filed on 5 August 2016, and U.S. Non-Provisional Patent Application Serial Number 15/333,854 filed on 25 October 2016, both entitled "Belt-Driven Roller Conveyor" and both assigned to the assignee hereof.

### FIELD OF THE INVENTION

The present invention to transport and accumulation conveyors that support articles on rollers driven by a padded chain or linear belt, and more particularly to a conveyor section.

### BACKGROUND

Powered roller conveyor systems are used in the material handling system to convey articles such as products in totes or cartons through a material handling system. A drive belt or chain can be used to turn rollers that provide the support surface for the articles. One generally-known accumulation and transportation conveyor uses a drive belt that longitudinally underlies the roller that are oriented transverse to the longitudinal axis of the conveyor. This generally-known belt-drive roller conveyor has an elongate transverse cross section with a thin vertical cross section. Thus, the section of conveyor served by such a particular belt is necessarily straight or nearly straight. At each end of the section, the upper portion of the belt by a pulley having a horizontal, transverse axis guiding the remainder of a belt loop beneath the portion that drives the rollers. The belt can have advantages of being relatively quiet as compared to chains.

Another generally-known powered roller conveyor incorporates a drive chain that is topped by a drive pad that contacts the undersurface of the live rollers. This chain-driven pad is relatively narrow in horizontal cross section as installed down a longitudinal axis of the conveyor. Being narrow, the chain-driven pad can be horizontally turned at each end of a section of conveyor. This horizontal return loop enables curving the section of conveyor to the right or left as required rather than having to be essentially straight. Although providing design flexibility, the drive chain can create more noise than a belt implementation.

DE202004019963U1 discloses a conveyor section according to the preamble of claim 1. Said document discloses a mechanical handling system having a conveyer consisting of a horizontal parallel array of rollers located over a drive belt that is essentially vertical and powered by a drive unit. The drive unit has two rollers whose axis of rotation are essentially upright and located either side of the belt. The rollers are transposed with respect to each other. The drive unit presses the drive belt against the transport roller.

US6612423B1 discloses an article conveyor having live rollers driven by a polymeric driven pad which has a wear indicator element co-extruded with the driven pad. The wear indicator element is visually distinct from the driven pad and has converging sides in the driven pad so that wear on the pad is indicated by the amount of the wear indicator element visible to an observer.

### BRIEF DESCRIPTION OF DRAWINGS

The accompanying drawings illustrate exemplary embodiments of the invention, and together with the general description given above and the detailed description given below, serve to explain the features of the invention, which is defined in claim 1.
FIG. 1 illustrates a side view of a powered roller conveyor with a longitudinally cutaway detail view of live rollers driven by a having a horizontally-looped drive belt;
FIG.2 illustrates a top view of a curved conveyor section of the powered roller conveyor of FIG. 1;
FIG.3 illustrates an isometric view of a straight conveyor section of the powered roller conveyor of FIG. 1;
FIG. 4 illustrates a rear view of the powered roller conveyor of FIG. 1 in transverse horizontal cut away exposing the horizontally-looped drive belt;
FIG. 5 illustrates a rear detail view of the powered roller conveyor of FIG. 1 in transverse horizontal cut away exposing the horizontally-looped drive belt;
FIG. 6 illustrates a rear isometric detail view of the powered roller conveyor of FIG. 1 in transverse horizontal cutaway exposing the horizontally-looped drive belt;
FIG.7 illustrates a rear isometric detail view of the powered roller conveyor of FIG. 7 with a transfer belt over the live rollers;
FIG.8 illustrates an isometric view of a portion of the horizontally-looped drive belt with an enlarged head for increased contact area;
FIG.9 illustrates an isometric view of a portion of the horizontally-looped drive belt of FIG. 11 with vertically aligned center fibers for strength;
FIG. 10 illustrates an isometric view of a portion of a horizontally- looped drive belt with an enlarged head for increased contact area and a lower enlarged portion for retention, according to the invention;
FIG. 11 illustrates an isometric view of a portion of the horizontally-looped drive belt of FIG. 10 with vertically aligned center fibers for strength, according to one or more embodiment;
FIG. 12 illustrates a conceptual block diagram in transverse cross section of a horizontally-looped drive belt being vertically positioned for longitudinal movement by a pair of laterally opposing rollers that have vertical axes of rotation, according to one or more embodiments;
FIG. 13 illustrates an isometric disassembled view of an example accumulation conveyor having a side-mounted horizontally-oriented drive belt and having a section with a full-width transfer belt;
FIG. 14 illustrates an isometric view of a conveyor section of FIG. 13;
FIG. 15 illustrates a rear cutaway view of the example accumulation conveyor of FIG. 13;
FIG. 16 illustrates a graphical plot of test results for tracking location of a transfer belt installed on a INTELLIQ accumulation conveyor;
FIG. 17 illustrates a graphical plot of test results for deviation of the transfer belt installed on the rNTELLIQ accumulation conveyor; and
FIG. 18 illustrates a graphical plot of test results for tracking location of the transfer belt installed on the INTELLIQ accumulation conveyor.

### DETAILED DESCRIPTION

The invention is defined in claim 1. Embodiments of the invention become apparent from the dependent claims. A conveyor section for transportation or accumulation of articles such as cartons and totes includes a pair of spaced, opposing side rails, vertical frame members attached transversely between the pair of opposing side rails, and live rollers transversely attached for rotation between the opposing side. An upstream end idler and a downstream end idler both having a vertical axis of rotation are attached at respective upstream and downstream ends of the conveyor section. A drive belt is vertically elongate and supported for horizontal looping between the upstream and downstream end idlers. The drive belt supported and guided by the vertical frame members such that a drive loop side and a return loop side are horizontally positioned under the live rollers. The drive loop side of the drive belt is at selectively engageable to an undersurface of the live rollers. A drive motor is operatively coupled to drive the drive belt.

The various embodiments and arrangements will be described in detail with reference to the accompanying drawings.

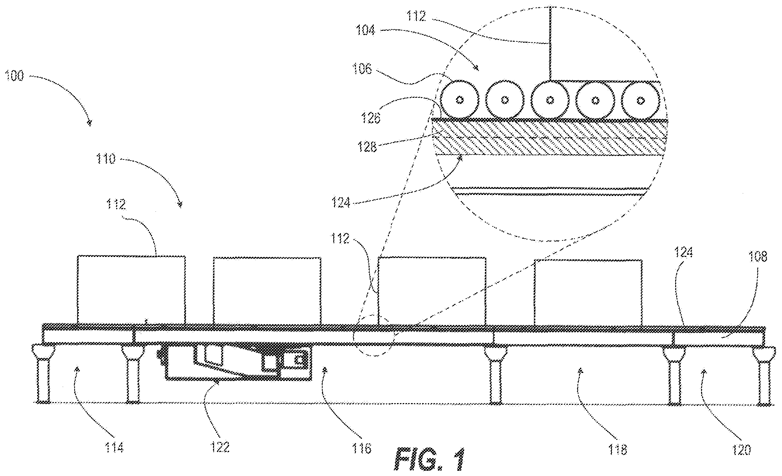

FIG. 1 illustrates a powered roller conveyor 100 that is driven by a longitudinally positioned drive belt 102. A bed 104 of transversely positioned live rollers 106 are axially attached to opposing side rails 108 of a conveyor section 110 to serve as a support surface for conveyed articles 112 such as totes or cartons. In one or more embodiments, the conveyor section 110 includes an infeed idler section 114, a center drive section 116, an intermediate section 118, and a discharge idler section 120. Articles 112 enter the infeed idler section 114 that has an end idler for supporting a proximal end of a horizontal loop of the drive belt 102. The center drive section 116 includes a motor, drive pulley and belt tensioner 122 assembly. The intermediate section 118 can be the most common conveyor section with multiple intermediate sections 118 supported by the center drive section 116. The articles 112 leave the conveyor section 110 at the discharge idler section 120, which includes an end idler to support a distal loop of the drive belt 102. A photo-eye guide rail 124 attached above each side rail 108 can provide information as to positions of the conveyed articles 112 such as for controlling zero- pressure accumulation before a merge into a sortation system. A wear indicator layer 126 of an enlarged head portion 128 or bulb contacts an underside of the live rollers 106. The wear indicator layer 126 has a different color than the rest of the drive belt 102 so that excessive wear can be detected prior to any exceedance of service life.

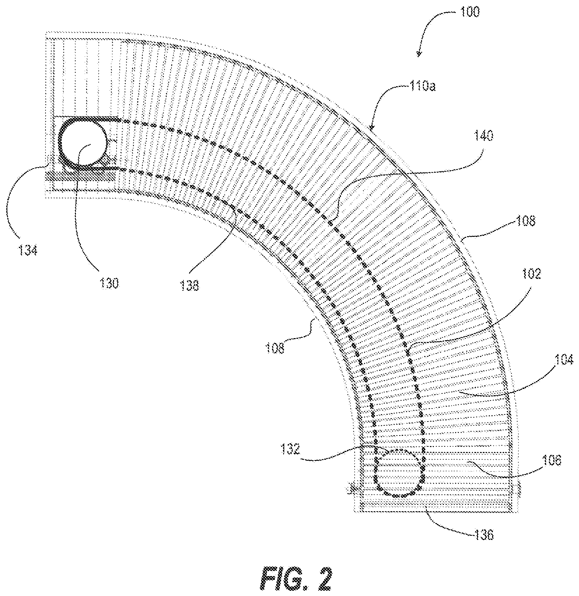

FIG. 2 illustrates a curved conveyor section 110a of the powered roller conveyor 100 with a horizontally looped drive belt 102 following a curved path. Since the drive belt 102 as installed is relatively thin laterally with its strength provided by its vertical dimension, the drive belt 102 can be turned horizontally in a relatively small radius. An upstream end idler 130 and a downstream end idler 132 both having a vertical axis of rotation attached at respective upstream and downstream ends 134, 136 of the conveyor section 110a. The drive belt 102 that is vertically elongate and is supported for horizontal looping between the upstream and downstream end idlers 130, 132, presenting drive side 138 and a return 140.

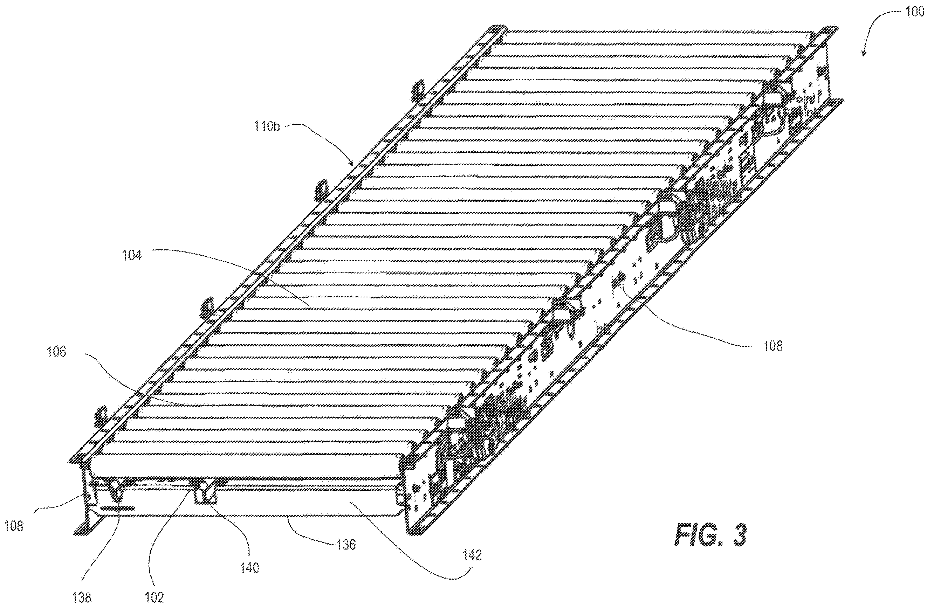

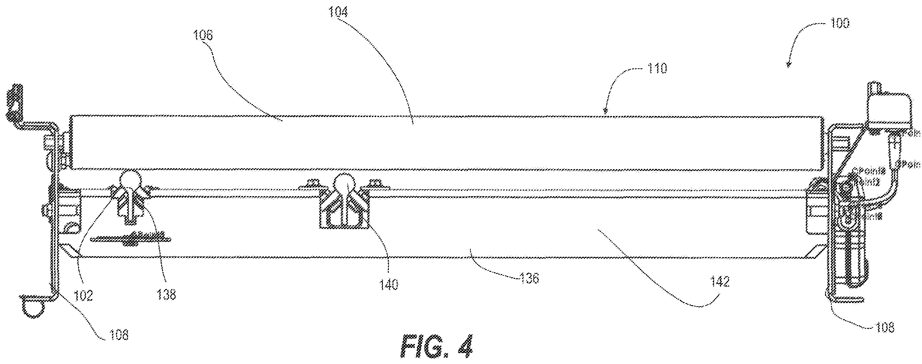

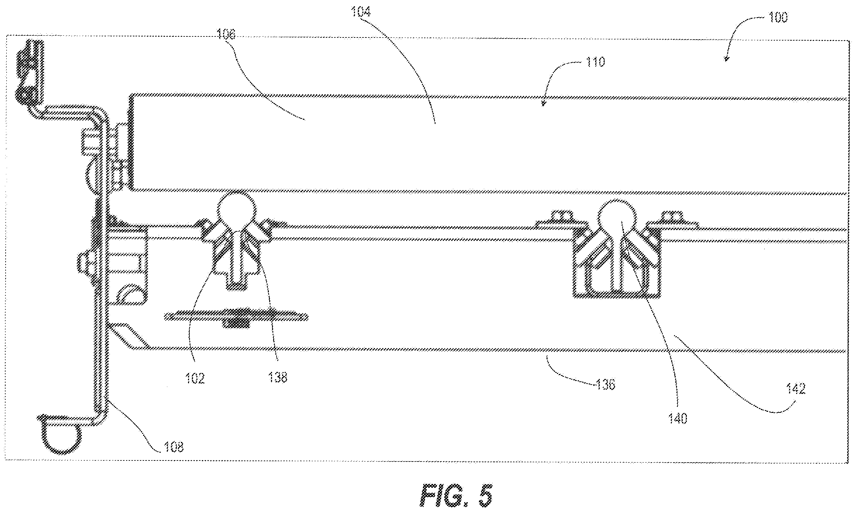

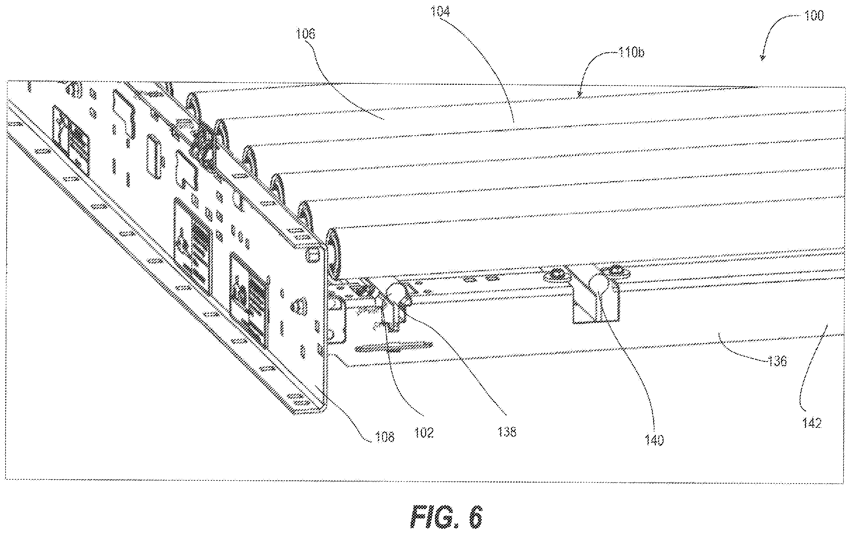

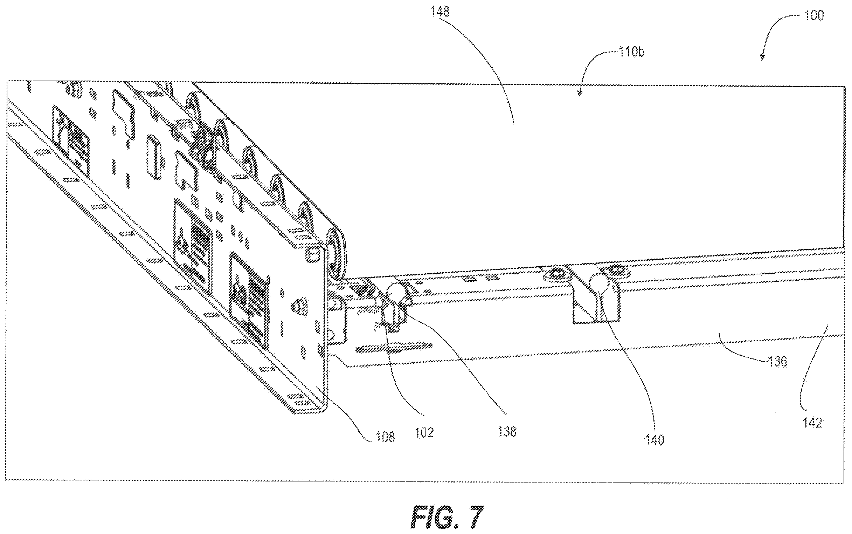

FIGs. 3 - 6 illustrate a straight conveyor section 110b of the powered roller conveyor 100 showing the drive side 138 and the return side 140 of the cutaway horizontally-looped drive belt 102, supported within transverse frame members 142 attached between the side rails 108. A drive loop side 144 and a return loop side 146 are horizontally positioned under the live rollers 106 with the return loop side 146 slight below and out of contact. Accumulator versions of the powered roller conveyor 100 can selectively engage portions of the drive loop side 140 while allowing other areas to coast to a stop. FIG. 7 illustrates the straight conveyor section 110b of the powered roller conveyor 100 having a transfer belt 148 installed over the live rollers 1006. The drive loop side 144 is in frictional engagement with the transfer belt 148. The embodiments illustrated in FIGs. 3 - 6 are not a part of the present invention.

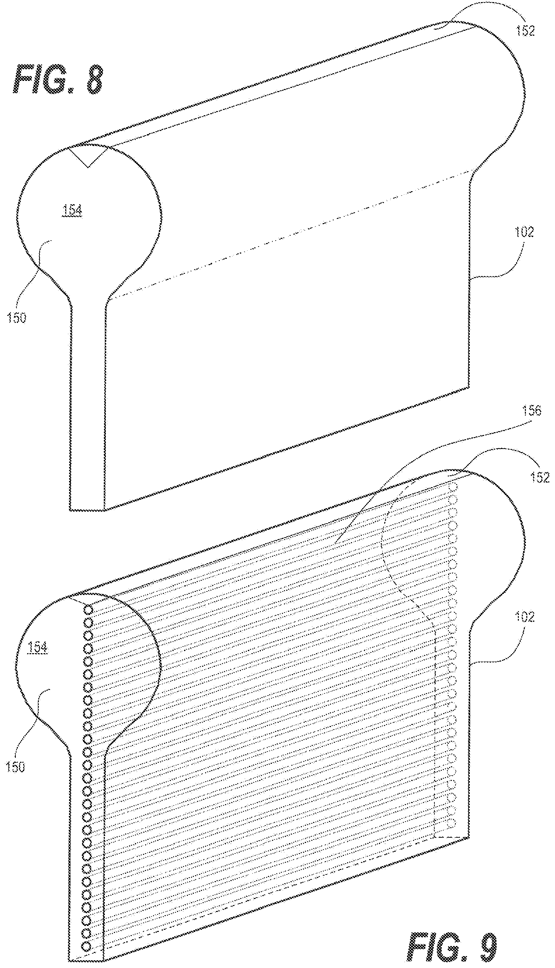

FIGs. 8- 9 illustrate the horizontally-looped drive belt 102 having an enlarged drive head 150 for increased contact surface for driving a series of live rollers 106 (FIG. 1). A wear indicator strip 152 formed in a top edge of the enlarged drive head 150 can provide an indication of a worn condition of the drive belt 102 prior to reaching its service life. FIG. 8 illustrates an elastomeric material 154 of the drive belt 102 for compressing on an inside of a turning radius and expanding on an outside of a turning radius. Vertically aligned center fibers 156 for strength are positioned between the compressing and expanding lateral sides of the drive belt 102. The embodiments illustrated in FIGs. 7 - 9 are not a part of the present invention.

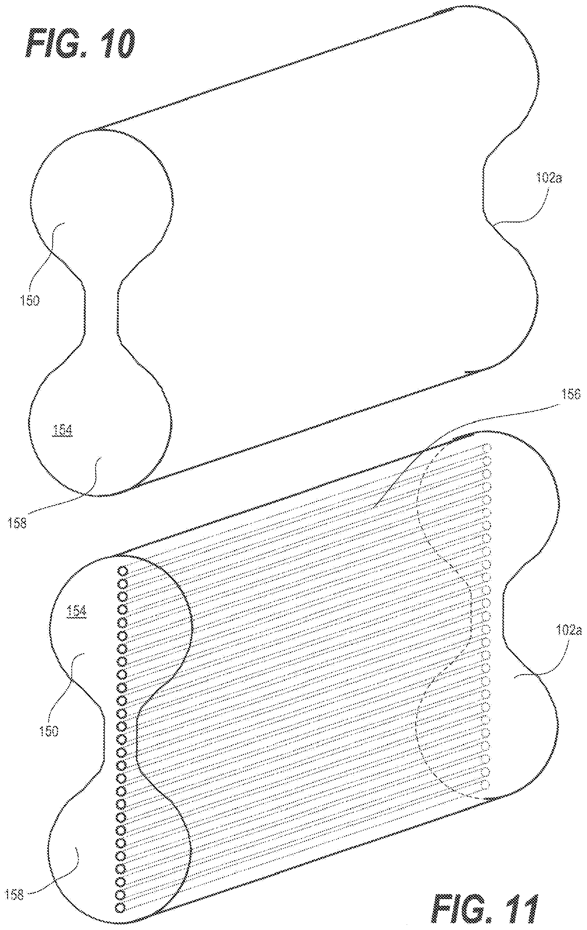

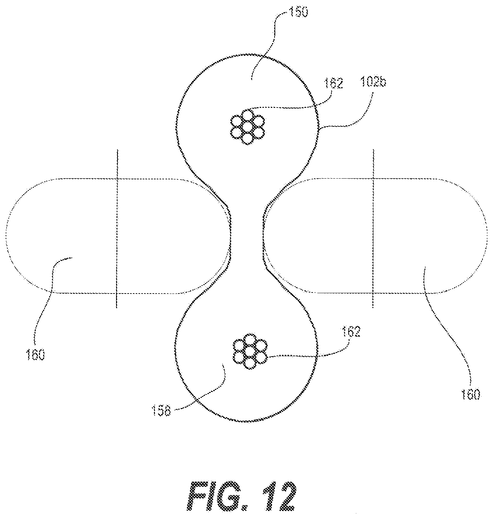

FIGs. 10- 11 illustrate a horizontally-looped drive belt 102a in accordance with the invention having an enlarged drive head 150 for increased contact surface for driving a series of live rollers 106 (FIG. 1) as well as a lower enlarged retention head 158. In at least one embodiment, FIG. 11 illustrates an elastomeric material 154 of the drive belt 102a for compressing on an inside of a turning radius and expanding on an outside of a turning radius. Vertically aligned center fibers 156 for strength are positioned between the compressing and expanding lateral sides of the drive belt 102a. FIG. 12 illustrates a further alternative horizontally-looped drive belt 102b being vertically positioned for longitudinal movement by a pair of laterally opposing rollers 160 that have vertical axes of rotation, according to one or more embodiments. Instead of vertically stacked longitudinally projecting fibers, the drive belt 102b includes a bundle of fibers 162 in both the enlarged drive head 150 and a lower retention head 158.

In one or more embodiments, the drive belt 102 can have a tensile pull capabilities of at least 204.12 kg ( 450 lbs ) and a minimum bend radius of at least 25.40 cm (10 inches). The elastomeric material 154 can be a thermoplastic or polymeric material such as but not limited to a urethane, and can be an elastomer. An endless drive belt 102 made of thermoplastic urethane may be strong in tension and can be easily manufactured in long lengths. Fibers 156, 162 can be formed from an aramid fiber, such as Kevlar^{™}, but are not limited thereto. Additional materials for the Fibers **156, 162** that serve as bendable tensile members can include, but are not limited to: steel, polyester, Nylon^{™}, Nomex^{™}, Vectran^{™}, or any other suitable cord materials for belting. Fibers **156, 162** can be separate fibers or fibers twisted together, and can be placed within drive belt **102** during the belt forming process. A coating can be applied to provide increase wear resistance and can comprise, but is not limited to, a layer of woven nylon fabric. Coating can be between about 0.025 - 5.08 mm ( 0.001 - 0.20 inches ) thick, such as about 0.127 mm ( 0.005 inches ) thick. In one or more embodiments, the elastomeric material **154** can be formed from thermoplastic urethane with a durometer of between about 76 and about 95 on the Shore A scale. For instance, elastomeric material **154** can have a durometer of about 85 on the Shore A Scale, but is not limited thereto. Durometer is a measure of "hardness" of an elastomeric material, and can be measured by a Shore A test instrument that applies an impact force to the urethane material, and measures the hardness of the urethane as an indentation depth resulting from that force. The 85 Shore A urethane material used in the drive belt **102** can be stiff, and can fall between a "hard" value of 70 Shore A described as a shoe heel, and an "extra hard" value of 90 Shore A described as a golf ball. This range information can be found at "http://www.casterland.com/info-durometer.htm".

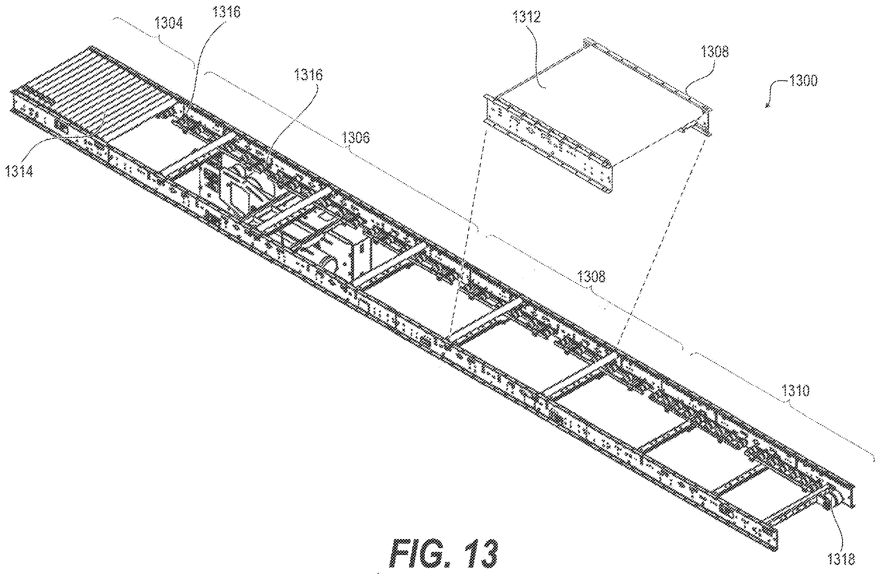

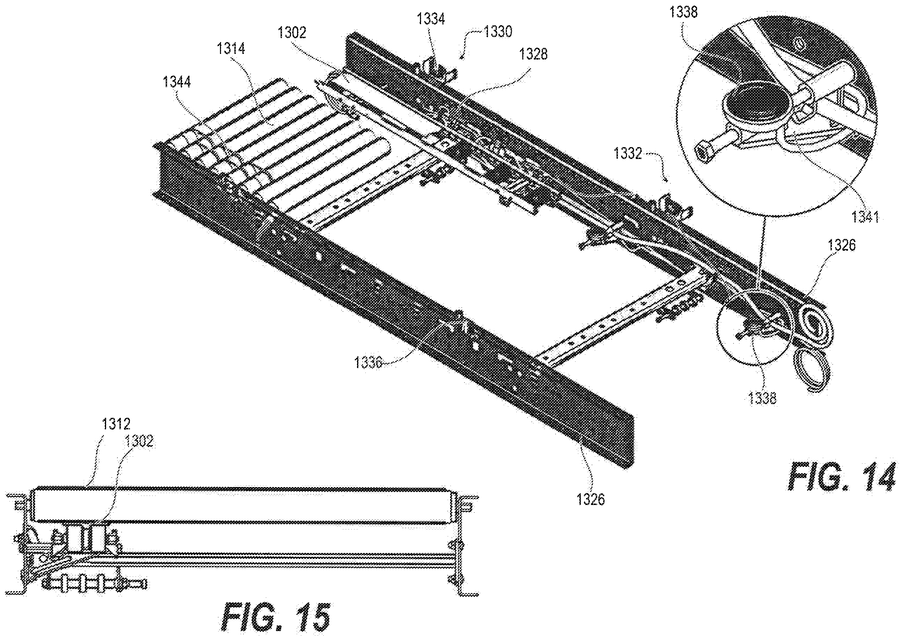

The embodiments illustrated in FIGs. 13 - 15 are not a part of the present invention. **FIGs. 13 - 15** illustrate a conveyor system **1300** that has a horizontally oriented V-backed drive belt **1302 (****FIG. 14****)** that is vertically looped. **FIG. 13** illustrates that the conveyor system **1300** typically contains an infeed idler section **1304,** a center drive section **1306,** an intermediate section **1308,** and a discharge idler section **1310.** Each section **1304, 1306, 1308, 1310** can include a transfer belt **1312** over carrier (live) rollers **1314** to enhance movement of small and light product such as polybags. Product (not shown) enters the conveyor system **1300** on the infeed idler section **1304** which contains one pressure shoe assembly **1316** and an end idler pulley **1318.** The V-backed drive belt **1302** wraps around the end idler pulley **1318.** The center drive section **1306** is the first or second section after the infeed idler section **1304** and can be pre-assembled to an intermediate section **1308.** The center drive section **1306** contains a motor, a drive pulley, and a pneumatic belt tensioner (not shown). Intermediate sections **1308** are typically the most common conveyor section, making up long lengths of conveyor between the infeed and discharge end idler sections **1304, 1310.** Product entering the conveyor system **1300** should already be aligned to one edge. Typically, this alignment is created by hard-skewed rollers in an upstream V-belt conveyor (not shown). Product leaves the conveyor system **1300** from the discharge idler section **1310.** The discharge idler section **1310** contains two pressure shoe assemblies **1316** and the end idler pulley **1318.** The discharge idler section **1310** is supplied with a separate solenoid-controlled valve (not shown) that controls the release of the discharge idler section **1310.**

**FIG. 14** illustrates that the intermediate sections **1308** include frames **1326,** carrier (live) rollers **1314,** a zone control ZoneFlex module **1328,** and necessary components to support the drive belt **1302** and general operation. Three-foot-long zones **1330, 1332** can be used for controlling the product flow. Each zone **1330, 1332** has a photo-eye **1334,** reflector **1336,** air diaphragms **1338,** and shares a ZoneFlex Module **1328.** A light beam travels across the intermediate section **1308** from the photo-eye **1334** to the reflector **1336** and back to the photo-eye **1334.** When product blocks the light beam, the photo-eye **1334** sends a signal to the ZoneFlex Module **1328,** which inflates or deflates the air diaphragm **1338.** When the air diaphragms **1338** are inflated, the air diaphragms **1338** mounted on a pressure shoe support **1341** raise the pressure shoe assembly **1316** including pressure rollers **1342** that frictionally engage the V-backed drive belt **1302** up against the bottom of the transfer belt **1312.** Thereby, the transfer belt **1312** for that zone **1330, 1332** discontinues coasting and is longitudinally moved at the speed of the drive belt **1302.** Some upstream live rollers **1314** are connected by power transfer bands **1344** to move with downstream roller that makes effective frictional engagement to the drive belt **1302.** **FIG. 15** illustrates the offset contact between V-backed drive belt **1302** and the transfer belt **1312.**

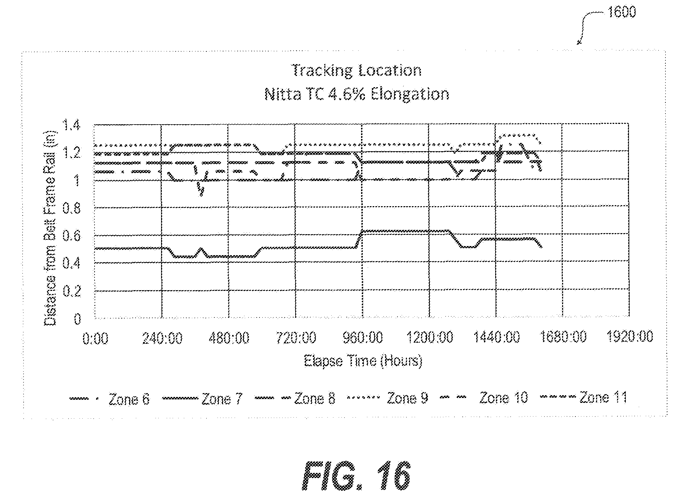

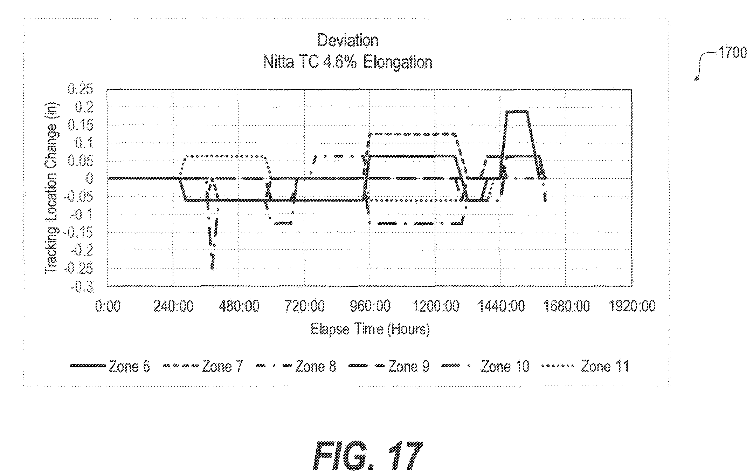

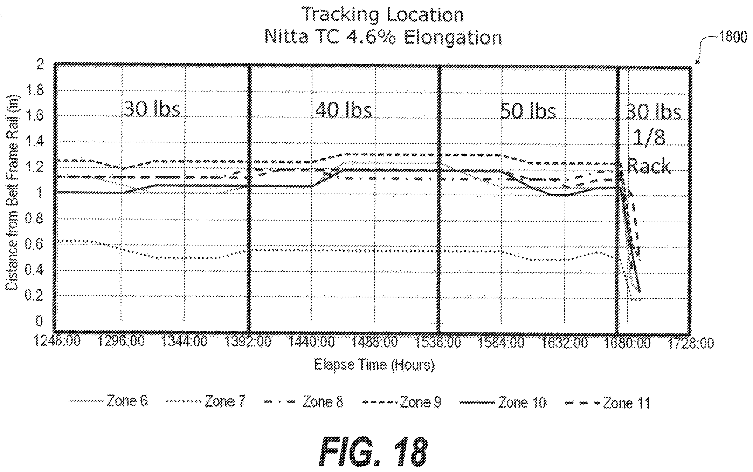

The driving contact between the drive belt **1302** and the transfer belt **1312** is off center and a prototype testing configuration did not include mechanisms to maintain tracking of the transfer belt **1312.** However, extended testing has shown that the transfer belt **1312** wears in a uniform manner and maintains tracking. **FIG. 16** illustrates a graphical plot **1600** of test results for tracking location of a transfer belt installed on a INTELLIQ accumulation conveyor. **FIG. 17** illustrates a graphical plot **1700** of test results for deviation of the transfer belt installed on the INTELLIQ accumulation conveyor. **FIG. 18** illustrates a graphical plot **1800** for tracking location.

Testing on two belts was performed to determine whether a transfer belt could be driven by a side mounted narrow drive belt without tracking or uneven wear problem. In particular, the selected transfer belt tested was POLYSPRINT TC PS-06 available from NITTA CORPORATION:
(a) Construction: (1) TPU (Taffeta surface, Green) and (2) Conductive TPU (Textured surface, Black), antistatic;
(b) Available Width: 10 to 450 mm; Available Length: 400 to 100,000 mm; Thickness: 1.4 mm; Joint: Finger Joint (standard dimension: 10W * 30L) & Skiver Joint;
(c) Tensile strength: 30 N/mm, Elongation at break: 500%, test speed 50 mm/min, ambient condition 23° C, 50% humidity;
(d) Standard elongation: 5%;
(e) Tension at 5%: 0.8 N/mm after 200 hours running-in, ambient condition 23° C, 50% humidity;
(e) Minimum pulley dia. φ40mm
(f) Temperature range: -20 to +60°C;
(g) Coefficient of friction: 0.6 to 0.7 (Paper) /0.3 to 0.4(Steel) Green side; 0.6 to 0.7 (Paper) /0.3 to 0.4 (Steel) Black side, Measuring condition: 7kPA* lmm/s, ambient condition 23° C, 50% humidity;
(h) Mass 1.5 kg/m2

The specific design and testing parameters for the tested transfer belt were as follows:
Belt type TC, Belt width 838 mm, Belt length 1165 mm, Elongation ε 4.6%;
Belt Speed V 61.0 m/min;
Total Mass of Conveying Goods 91 kg;
Total Mass of Conveying Goods W_{G} 889 N;
Total Mass of Belt W_{B} 15.088 N;
TC Unit mass 1.5 kg/m²
Carrier Roller Mass WC 400 N Estimation;
Angle of Contact (AOC) on the Drive Pulley θ 180°;
Coefficient of Friction (COF) (between Belt and Plate) µa 0.40;
COF (between Belt and Drive pulley) µ 0.2;
Coefficient by the Drive Pulley Position C₁ 0.0;
Startup time t 0.5 s;
Acceleration α 2.0 m/s², α=V/(60×t);
Conveyor inclination angle θ 0.0°;
Service Factor (SF) C₂ 1.5;
Standard Elongation ε₀ 5.0%;
Tension at ε₀% To 0.8 N/mm:

Installation parameters were determined as follows:
Effective Tension Te 249 N, Formulation *Te =* (*W_{G} + W_{B} + W_{C}*)/20 *+ W_{G}* sin *θ +* (*M_{G} + M_{B}*) × *α*; Tensionx2 2To 1228 N, Formulation 2*To = Te* × (*K + C*1) × *C2*
*K =* {*EXP*(*µ* × *θ*) + 1 }/ {*EXP*(*µ* × *θ*) - 1 };
Elongation ε [%]4.58, Formulation *ε*= (*Fa* × *εO*)/(*W* × 2 × f);
Calculated Motor Power P 253 W, Formulation P = (*Te* × *V*)/60*.*

Test setup was designed to test a worst case scenario:
0.61m (24 inch) zones;
0.86m (34 inch) Width;
180 FPM;
Heavy duty (HD) drive belt;
Accumulation logic (cycling of drive belt on zone belt);
Two continuously running zones.

Variables included testing two belt manufacturers with product weight increasing as test progressed. Frame rack pushed frame out of square to test effects. Test results indicate that the zone transfer belts for both manufacturers held up better than expected to belt-on-belt contact. IntelliQ HD Drive Belt was observed to have minimum wear with only slight darkening of drive surface. Belt tracking, belt wear, drive torque and accumulation logic were all proved out through the test results for use without product, with light product, and with heavy product.

## Claims

1. A conveyor section comprising:
a pair of spaced, opposing side rails (108);
live rollers (106) transversely attached for rotation between the opposing side rails (108) providing a conveying surface for articles (112);
an upstream end idler (130) and a downstream end idler (132) both having a vertical axis of rotation attached at respective upstream and downstream ends (134, 136) of the conveyor section;
a drive belt (102a) that is vertically elongate and having a drive loop side and a return loop side that are horizontally positioned under the live rollers with the drive loop side engageable to an undersurface of the live rollers, wherein the drive belt (102a) is supported for horizontal looping between the upstream and downstream end idlers (130, 132);
a drive motor operatively coupled to drive the drive belt (102a); wherein the drive belt (102a) comprises an upper enlarged head portion (150) for increased contact surface for driving a series of live rollers, **characterised in that** the conveyor section comprises vertical frame members (142) attached transversely between the pair of opposing side rails (108), wherein the drive belt (102a) is supported by the vertical frame members (142), and wherein the drive belt (102a) comprises a lower enlarged retaining portion (158).

2. The conveyor section of claim 1, wherein the upper enlarged head portion (150) further comprises a wear indicator strip having a different color than an adjacent portion of the enlarged head portion (150).

3. The conveyor section of claim 1, wherein the drive belt (102a) further comprises a bundle of longitudinal fibers (162) embedded in the lower enlarged retaining portion (158) of an elastomeric material (154).

4. The conveyor section of claim 1, wherein the drive belt (102a) further comprises a vertically aligned stack of strands of longitudinal fibers embedded in an elastomeric material (154).

5. The conveyor section of claim 1, wherein the drive belt (102a) further comprises a bundle of longitudinal fibers (162) embedded in the upper enlarged head portion (150) of an elastomeric material (154).

6. The conveyor section of claim 1, wherein the conveyor section is curved.

7. The conveyor section of claim 1, further comprising a vertical actuator positioned under the drive belt (102a) to selectively raise the drive belt (102a) into frictional engagement with at least one of the live rollers (106).

## Patentansprüche

1. Förderabschnitt, umfassend:
ein Paar von beabstandeten gegenüberliegenden Seitenschienen (108);
getriebene Walzen (106), die zur Drehung zwischen den gegenüberliegenden Seitenschienen (108) transversal befestigt sind, sodass eine Förderfläche für Artikel (112) bereitgestellt ist;
eine vorgelagerte Endumlenkrolle (130) und eine nachgelagerte Endumlenkrolle (132), die beide eine vertikale Drehachse aufweisen, die an jeweiligen vorgelagerten und nachgelagerten Enden (134, 136) des Förderabschnitts befestigt ist;
einen Antriebsriemen (102a), der vertikal langgestreckt ist und eine Antriebsschleifenseite und eine Rückholschleifenseite aufweist, die horizontal unter den getriebenen Walzen so positioniert sind, dass die Antriebsschleifenseite mit einer Unterfläche der getriebenen Walzen in Eingriff gebracht werden kann, wobei der Antriebsriemen (102a) für eine horizontale Schleifenbildung zwischen der vorgelagerten und der nachgelagerten Endumlenkrolle (130, 132) getragen ist;
einen Antriebsmotor, der betriebsfähig dazu gekoppelt ist, den Antriebsriemen (102a) anzutreiben, wobei der Antriebsriemen (102a) einen oberen erweiterten Kopfteil (150) für eine vergrößerte Kontaktfläche zum Antreiben einer Reihe von getriebenen Walzen umfasst, **gekennzeichnet dadurch, dass** der Förderabschnitt vertikale Rahmenelemente (142) umfasst, die zwischen dem Paar von gegenüberliegenden Seitenschienen (108) transversal befestigt sind, wobei der Antriebsriemen (102a) durch die vertikalen Rahmenelemente (142) getragen ist, und wobei der Antriebsriemen (102a) einen unteren erweiterten Halteteil (158) umfasst.

2. Förderabschnitt nach Anspruch 1, wobei der obere erweiterte Kopfteil (150) ferner einen Verschleißindikatorstreifen umfasst, der eine andere Farbe als ein angrenzender Teil des erweiterten Kopfteils (150) aufweist.

3. Förderabschnitt nach Anspruch 1, wobei der Antriebsriemen (102a) ferner ein Bündel von länglichen Fasern (162) umfasst, die in den unteren erweiterten Halteteil (158) aus einem Elastomermaterial (154) eingebettet sind.

4. Förderabschnitt nach Anspruch 1, wobei der Antriebsriemen (102a) ferner einen vertikal ausgerichteten Stapel von Strängen von länglichen Fasern umfasst, die in ein Elastomermaterial (154) eingebettet sind.

5. Förderabschnitt nach Anspruch 1, wobei der Antriebsriemen (102a) ferner ein Bündel von länglichen Fasern (162) umfasst, die in den oberen erweiterten Kopfteil (150) aus einem Elastomermaterial (154) eingebettet sind.

6. Förderabschnitt nach Anspruch 1, wobei der Förderabschnitt gekrümmt ist.

7. Förderabschnitt nach Anspruch 1, ferner umfassend einen vertikalen Aktuator, der unter dem Antriebsriemen (102a) positioniert ist, um den Antriebsriemen (102a) selektiv in einen Reibungseingriff mit mindestens einer der getriebenen Walzen (106) anzuheben.

## Revendications

1. Section de transporteur comprenant :
une paire de rails latéraux opposés (108) espacés ;
des rouleaux commandés (106) fixés transversalement pour une rotation entre les rails latéraux opposés (108) fournissant une surface de transport pour des articles (112) ;
une roue libre d'extrémité amont (130) et une roue libre d'extrémité aval (132) ayant toutes deux un axe de rotation vertical fixées au niveau des extrémités amont et aval (134, 136) respectives de la section de transporteur ;
une courroie d'entraînement (102a) qui est allongée verticalement et ayant un côté boucle d'entraînement et un côté boucle de retour qui sont positionnés horizontalement sous les rouleaux commandés avec le côté boucle d'entraînement pouvant se mettre en prise avec une surface inférieure des rouleaux commandés, dans laquelle la courroie d'entraînement (102a) est supportée pour former une boucle horizontale entre les roues libres d'extrémité amont et aval (130, 132) ;
un moteur d'entraînement couplé de manière opérationnelle pour entraîner la courroie d'entraînement (102a) ; dans laquelle la courroie d'entraînement (102a) comprend une partie de tête élargie (150) supérieure pour une surface de contact accrue pour l'entraînement d'une série de rouleaux commandés, **caractérisée en ce que** la section de transporteur comprend des éléments formant cadres verticaux (142) fixés transversalement entre la paire de rails latéraux opposés (108), dans laquelle la courroie d'entraînement (102a) est supportée par les éléments formant cadre verticaux (142), et dans laquelle la courroie d'entraînement (102a) comprend une partie de retenue élargie (158) inférieure.

2. Section de transporteur selon la revendication 1, dans laquelle la partie de tête élargie (150) supérieure comprend en outre une bande indicatrice d'usure ayant une couleur différente de celle d'une partie adjacente de la partie de tête élargie (150).

3. Section de transporteur selon la revendication 1, dans laquelle la courroie d'entraînement (102a) comprend en outre un faisceau de fibres longitudinales (162) logé dans la partie de retenue élargie (158) inférieure d'un matériau élastomère (154).

4. Section de transporteur selon la revendication 1, dans laquelle la courroie d'entraînement (102a) comprend en outre un empilement aligné verticalement de brins de fibres longitudinales logés dans un matériau élastomère (154).

5. Section de transporteur selon la revendication 1, dans laquelle la courroie d'entraînement (102a) comprend en outre un faisceau de fibres longitudinales (162) logé dans la partie de tête élargie (150) supérieure d'un matériau élastomère (154).

6. Section de transporteur selon la revendication 1, dans laquelle la section de transporteur est incurvée.

7. Section de transporteur selon la revendication 1, comprenant en outre un actionneur vertical positionné sous la courroie d'entraînement (102a) pour soulever sélectivement la courroie d'entraînement (102a) pour la mettre en prise par frottement avec au moins l'un des rouleaux commandés (106).
